# EUROPEAN PATENT SPECIFICATION

(11) **EP 0 473 557 B1**
(45) Date of publication and mention of the grant of the patent: **26.10.1994**
(21) Application number: 91830346.2
(22) Date of filing: 13.08.1991
(51) Int. Cl.: B01J 47/04, B01J 47/12

(54) **Filter compound for the steam condensate from a thermoelectric, conventional or nuclear power station**
Filtrierzusammenstellung für das Dampfkondensat eines thermoelektrischen, konventionellen oder nuklearen Kraftwerkes
Composition filtrante pour le condensat de vapeur d'une centrale thermoélectrique, conventionnelle ou nucléaire

(30) Priority: 21.08.1990 IT 1250790
(43) Date of publication of application: 04.03.1992
(73) Proprietor: AQUA CHEM S.r.l., I-03023 Ceccano, Frosinone (IT)
(72) Inventor: de Martino, Roberto, I-19038 Sarzana, La Spezia (IT)
(74) Representative: Mannucci, Gianfranco, Dott.-Ing.

(56) References cited:
- EP-A- 0 155 384
- DE-A- 2 259 367
- FR-A- 2 550 097
- US-A- 3 880 754
- US-A- 4 853 130

## Description

The present invention relates to a filter compound for the steam condensate from a thermoelectric, conventional or nuclear power station, according to the preamble of claim 1.

Thermoelectric, conventional and nuclear power stations require, for filtering the steam condensate and adhering to the stringent feed water specifications, a technology which uses so-called coated filters, in which the filter action with regard to metal oxides and ionised salts is accomplished by pulverulent ion exchange resins and/or inert materials, which are deposited in suitable process lines on filtration sets of various types, which are able to retain the filtration material and to allow the water, which is to be filtered, to pass through.

The most commonly used filtration materials consist of pulverulent ion exchange resins (sulphonic acid-based cationic, or anionic) mixed with cellulose fibres.

The ion exchange resins used in the process for, filtration of steam condensates must meet particular requirements regarding purity, with special limits for metallic and organic contaminants.

The resins suitable for use are subjected to a pulverisation process and caused to interact in an aqueous medium to give rise to a clearly apparent flocculation, the product from which, once transferred onto filtration sets, will represent the real and proper coating of the filters.

The steam condensate to be treated passes through the filtration panel thus formed and deposits thereon all the ionic and nonionic impurities.

Owing to the retained suspended solids and the exchanged ions, the filtration panel becomes exhausted and therefore requires replacement with fresh material. There are many different disposal methods for the thus exhausted, discharged filtration material, depending on the type of power station in which the products are used.

In particular, in nuclear power stations of the BWR type (boiling water reactors) the exhausted panels containing a certain dose of radioactivity must be subjected to a solidification process, which is usually effected with bitumen or cement. This demonstrates the considerable cost involved in the final process, which can be quantified at about nine times the cost of fresh resin.

This demonstrates the importance of minimising the quantity of exhausted panels discharged to the solidification plant.

To achieve this, it is necessary to employ carefully selected and qualified products which allow simultaneously to obtain the maximum filtration capacity for condensate and minimum consumption.

From US-A-4,853,130 a process for the treatment of radioactive waste is known, wherein an admixture of a weakly acidic cation exchange resin and a strongly basic anion exchange resin is used. As cation exchange resin an Amberlite IRC-50 is suggested which, when reacted with a strongly basic anion resin, gives rise to a turbid surnatant.

Such an admixture of resins would not be suitable for use in a steam condensate treatment in a power plant, due to the very stringent requirements with respect to turbidity and sedimentation ratio which must be met.

It has been now surprisingly discovered, that the use of a "full-gel" weakly acidic cation exchange resin in combination with a strongly basic anion exchange resin meets the purity requirements which must be met in a power plant and also gives raise to a high swelling of the flocks during functioning of the filter, thus increasing the life time of the filter and reducing the amount of waste.

The additional use of inert polyacrylonitrile fibres in the resin admixture gives further advantages over the prior art, which will be set forth in more detail hereinafter.

Accordingly, the filter compound of the invention consists of a mixed product to be used for the filtration of the steam condensate from large thermoelectrical, conventional and/or nuclear units and is obtained by using, rather than strong sulphonic cation resins and cellulose fibres in, a mixture with a quaternary ammonium anion resin, a "full-gel" weakly acidic cation resin activated by carboxyl groups -COOH and an inert polyacrylonitrile fibre, the whole in a mixture with conventional anion resin.

The salient special feature of the product claimed is that up to now the inert material used together with the "full-gel" weakly acidic cation resin and strong basic anion rest consisted of cellulose fibres. The novel polyacrylonitrile fibre in a mixture with the weakly acidic cation resin and the anion resin provides the following advantages:
1) Even though the fibre has only a limited exchange capacity, it enhances the overall exchange capacity of the mixture.
2) The use of the fibre in the mixture favours the coating of various types of filter elements used in the filtration system.
3) The simultaneous use of the inert fibre and the weak cation resin enhances the retention capacity for forms of colloidal oxides which cannot readily be retained by conventional mixtures of resins with inert cellulosic materials.
4) The use of the inert fibre in the mixture contributes to a limitation of cracking in the filtration panel when subjected to considerable loading with suspended oxides.
5) The simultaneous use of the weak cation resin and acrylonitrile fibre contributes to the formation of a soft and elastic filtration panel, in order to enable even oxides which are difficult to filter to be filtered out effectively, thus extending the life of the panel before its exhaustion, and thereby diminishing the sudden increase in hydraulic pressure drops across the filtration panel.
6) On its part, the pulverulent weak cation resin swells gradually as the H⁺ exchange groups therein are substituted by divalent Fe ions.
   This significantly contributes to the retention of the porosity and elasticity in the filtration panel and thus enhances its operating capacity and service life.
7) The mixture thus formulated significantly reduces the number of discharged exhausted panels, with important economic and technical advantages.

The filter product according to the invention is obtained by mixing the weakly acidic cation resin and the strongly hydroxylic anion resin in ratios from 1:1 to 5:1 on a dry basis. A maximum quantity of 50% by weight, on a dry basis, of polyacrylonitrile fibre is added to the mixture of the resins.

The term "dry basis" means the quantity of mixed products taken at zero humidity.

The base composition of the filter product claimed consists of:
1) Pulverulent weak cation exchange resin in the hydrogen form, of the formula

   C₁₂H₁₃COOH
2) Pulverulent strong anion exchange resin of the formula

   C₁₂H₁₈NOH
3) Polyacrylonitrile fibre of the formula

   C₂H₃CN

The cation resin used consists, as stated, of a weak cation resin and is thus characterised by the absence of sulphonic acid groups. The use of this product as a substitute for the conventional strong, cation resins actually inhibits the release of sulphonic acid groups from the cation resin when it is inserted in a cycle.

The use of the polyacrylonitrile fibre in turn avoids the problems of leaching of sodium and organic substances, typical of the use of cellulose-based inert products which, by their nature, are hydrolysable in water.

The use of the polyacrylonitrile fibre in the mixture leads to an in depth filtration action on the filter panel and not one which is merely superficial, as happens when mixtures of only pulverulent resins or resins mixed with cellulose are used.

The essential characteristics of the invention are summarised and outlined in the claims; the subjects and advantages thereof will also be evident from the following examples which relate to experiments carried out on pilot plants and real industrial plants.

### EXAMPLE 1:

### Experiments on the pilot plant.

A first test cycle was carried out using a pilot plant equipped with a 70" No. 1 polypropylene filter element, altogether identical to filter elements installed in industrial plants.

The filter element was contained in a transparent prototype filter in order to allow better observation of the behaviour of the filter material used.

The pilot plant was capable of being fed with cold or hot deionised water.

Since it was the object of the research to verify the behaviour of the filter under conditions similar to those existing in a BWR condensate treatment circulation system, some of the chemical-physical parameters verifiable in such a circulation were reproduced in the course of the tests.

The results obtained in various experimental cycles were carried out under the following operating conditions:
- temperature of the experiment: 22 to 87°C.
- specific capacity of the experiment: 6 m³/h/m² of filtration surface area.
- pressure drop across the freshly prepared filter panel: 20-22 m.c.l.
- quantity of filter material, dry basis: 1000 g/m².
Composition of the filter material used:
cation/anion resins in a 2:1 ratio and 3% of a polyacrylonitrile fibre.

The results obtained in the pilot plant tests can be summarised as follows:

The insertion of several panels prepared with the above indicated product in a neutral cycle did not lead, even at a maximum temperature of 87°C, to an increase in the acid conductivity downstream of the filter panels, which demonstrates the high-temperature stability of the products used.

The coatings carried out showed a remarkable homogeneity of the filter panels and thus demonstrated the absolute adaptability of the filter product to the filter elements used industrially.

The positive results made it possible to carry out some tests in a nuclear BWR circulation system as indicated in Example 2.

### EXAMPLE 2 :

### Experiments on a nuclear plant.

The experiments carried out on the industrial scale on No. 2 filters in a nuclear power station confirmed the positive data already obtained on the pilot scale and, in addition, showed that the values of conductivity on insertion, of iron and copper retention and mean life of the panels were largely positive and better than the results obtainable by using conventional strong cation resins and mixtures with cellulose fibres.

The most important data were those obtained on the following condensates.
Specific capacity of the filters: 6.2 m³/h/m².
Application temperature: 85°C.
Total iron at the inlet of the filters in the middle of the cycle: 11 ppb;
Total iron at the outlet from the filters in the middle of the cycle: 0.02 ppb.
Total copper at the inlet to the filters, spot sample: 2.5 ppb
Total copper at the outlet from the filters, spot sample: 0.01 ppb
Mean cycle life of the filters: 60 days.
Composition of the filter product: cation/anion resins in a 2:1 ratio and 3% of polyacrylonitrile fibre.

The data given are sufficient for an assessment of the functioning of these novel product mixtures, which are superior to any other product type based on the pulverulent ion exchange resins used hitherto.

The extraordinary performances obtained with the new product lines with respect to the cycle life of a coating prepared with the mixtures according to the present invention which will produce the benefit of a drastic reduction (down to 2/3) of the low-activity discharges from BWR reactors and secondary PWR circulation systems throughout the world have been obtained by the following innovative and synergistic actions:
A) The adoption of a particular weak cation exchange resin technically adapted to the problem, that is to say characterised by a high degree of swelling when converted from the activated form to the salt form:

R-H ---→ R-Na Swelling > 55%.

This compares with a maximum swelling of 25% obtainable with other types of weak cation resins and with traditional sulphonic acid cation resins. Since the swelling of the product occurs gradually in the course of time, as the ion exhaustion proceeds, that is, when the mixture constituting the coating is already on the filter elements which support the filter panel, the result clearly is the great and positive difference in behaviour of this new type of filter mixtures with regard to the exhaustion by suspended and dissolved solids.
B) The adoption of a particular weak cation exchange resin of the "full gel" type technically suitable for the problem.
The porous weak cation resins are, on the other hand, not suitable for specific use, since they produce, in the course of the pulverisation process, a consistent presence of extremely fine and even submicronic particles which, in the aqueous phase, inhibit the interaction with the pulverised anionic resin, the other component necessary in the mixture, in the desired respects. The result of the interaction between weak porous cation resin and pulverulent anion resin is adverse also with respect to the final characteristics of the mixture, which manifest themselves in aqueous phase: it is characterised by an excessive turbidity of the supernatant. This can create a sudden blockage of the support elements of the filter elements, instead of a long filtration cycle.
C) The adoption of the weak cation resin described above, which is technically adapted to the problem, allows a very precise particle size distribution of the final product, as reported below, to be obtained by means of a suitable grinding technique:

| | |
|---|---|
| > 190 micrometers | 2% |
| > 150 micrometers | 11% |
| > 74 micrometers | 28% |
| < 74 micrometers | 59% |

The interaction of this product, so finely pulverised, in mixture with a conveniently pulverised anion resin allows a flocculation, which is particularly well equilibrated with respect to both the cation/anion ratio and the equilibrium of the electrokinetic potentials of the respective resins, to be obtained in aqueous phase. The resulting flocculation in aqueous phase is thus characterised by high stability and complete absence of residual turbidity in the supernatant. These final characteristics of the resin suspension allow homogeneous coating of the filter elements on the supports by the resin mixture used and maximum exploitation of their filtration capacity, which can be quantified by filtration cycles which are much longer than those obtainable with other products.

Although the present invention may be stated on the basis of what has been described and illustrated above, many modifications and variants are possible in the realisation of the invention; such modifications and variants must, however, be considered as being based on the claims which follow:

## Claims

1. Filter compound for the steam condensate from a thermoelectric, conventional or nuclear power station, comprising: a pulverulent mixture including a weakly acidic cation resin activated by carboxyl groups, a strong anion exchange resin, characterised in that said weakly acidic cation resin is a "full-gel" resin and that it further includes an inert fibre of the polycrylonitrile type.

2. Filter compound for the steam condensate from a thermoelectric, conventional or nuclear power station, according to the preceding claim, characterised in that the said weakly acidic cation resin, activated by carboxyl groups, is of the following formula:
C₁₂H₁₃COOH

3. Filter compound for the steam condensate from a thermoelectric, conventional or nuclear power station, according to Claim 1, characterised in that the said inert polyacrylonitrile fibre is of the following formula:
n(C₂H₃CN).

4. Filter compound for the steam condensate from a thermoelectric, conventional or nuclear power station, according to Claim 1, characterised in that the said strong anion exchange resin is a quaternary ammonium anion resin of the formula:
C₁₂H₁₈NOH.

5. Filter compound for the steam condensate from a thermoelectric, conventional or nuclear power station, according to Claim 1, characterised in that the weight ratio, on a dry basis, of the weakly acidic cation resin and the strong anion exchange resin is between 1:1 and 5:1.

6. Filter compound for the steam condensate from a thermoelectric, conventional or nuclear power station, according to Claim 1, characterised in that the said inert polyacrylonitrile fibre is present in the mixture of the two remaining constituents in a quantity by weight of less than 50 per cent, measured on a dry basis.

7. Filter compound for the steam condensate from a thermoelectric, conventional or nuclear power station, according to claim 1, characterized in that the compound has a particle size distribution as follows:
| | |
|---|---|
| > 190 micrometers | 2% |
| > 150 micrometers | 11% |
| > 74 micrometers | 28% |
| < 74 micrometers | 59% |

## Patentansprüche

1. Filtermischung für Dampfkondensat von einem thermoelektrischen konventionellen oder kerntechnischen Kraftwerk mit einem feinpudrigen Gemisch, das ein schwach saures, durch Karboxylgruppen aktiviertes Kationenaustauscherharz und ein stark basisches Anionenaustauscherharz enthält, dadurch gekennzeichnet, daß das schwach saure Kationenaustauscherharz ein "Vollgel"-Harz ist und daß es weiter inerte Fasern des Polyacrylonitril-Typs enthält.

2. Filtermischung für Dampfkondensat von einem thermoelektrischen konventionellen oder kerntechnischen Kraftwerk nach dem vorhergehenden Anspruch, dadurch gekennzeichnet, daß das schwach saure, durch Karboxylgruppen aktivierte Kationenaustauscherharz folgende Formel hat:
C₁₂H₁₃COOH.

3. Filtermischung für Dampfkondensat von einem thermoelektrischen konventionellen oder kerntechnischen Kraftwerk nach Anspruch 1, dadurch gekennzeichnet, daß die inerte Polyarylonitrilfaser folgende Formel hat:
n(C₂H₃CN).

4. Filtermischung für Dampfkondensat von einem thermoelektrischen konventionellen oder kerntechnischen Kraftwerk nach Anspruch 1, dadurch gekennzeichnet, daß das stark basische Anionenaustauscherharz ein quaternäres Ammonium-Anionenharz ist mit der Formel:
C₁₂H₁₈NOH.

5. Filtermischung für Dampfkondensat von einem thermoelektrischen konventionellen oder kerntechnischen Kraftwerk nach Anspruch 1, dadurch gekennzeichnet, daß das Gewichtsverhältnis des schwach sauren Kationenaustauscherharzes zu dem stark basischen Anionenaustauscherharz auf Trockenbasis zwischen 1:1 und 5:1 liegt.

6. Filtermischung für Dampfkondensat von einem thermoelektrischen konventionellen oder kerntechnischen Kraftwerk nach Anspruch 1, dadurch gekennzeichnet, daß die inerte Polyacrylonitrilfaser in dem Gemisch der beiden verbleibenden Bestandteile auf Trockenbasis gemessen in einer Gewichtsmenge von weniger als 50 % enthalten ist.

7. Filtermischung für Dampfkondensat von einem thermoelektrischen konventionellen oder kerntechnischen Kraftwerk nach Anspruch 1, dadurch gekennzeichnet, daß die Mischung folgende Partikelgrößenverteilung hat:
| | |
|---|---|
| > 190 Mikrometer | 2 % |
| > 150 Mikrometer | 11 % |
| > 74 Mikrometer | 28 % |
| < 74 Mikrometer | 59 %. |

## Revendications

1. Composition filtrante pour le condensat de vapeur d'une centrale thermoélectrique, conventionnelle ou nucléaire, comprenant: un mélange pulvérulent incluant une résine à cations légèrement acides activée par des groupes carboxyles, une résine fortement échangeuse d'anions, caractérisée en ce que ladite résine à cations faiblement acides est une résine complètement gélifiée (full-gel resin) et en ce qu'elle inclut de plus une fibre inerte du type polycrylonitrile.

2. Composition filtrante pour le condensat de vapeur d'une centrale thermoélectrique, conventionnelle ou nucléaire, selon la revendication précédente, caractérisée en ce que ladite résine à cations faiblement acides, activée par des groupes carboxyles, a la formule suivante
C₁₂H₁₃COOH.

3. Composition filtrante pour le condensat de vapeur d'une centrale thermoélectrique, conventionnelle ou nucléaire, selon la revendication 1, caractérisée en ce que la dite fibre inerte de polyacrylonitrile a la formule suivante:
n(C₂H₃CN).

4. Composition filtrante pour le condensat de vapeur d'une centrale thermoélectrique, conventionnelle ou nucléaire, selon la revendication 1, caractérisée en ce que la dite résine fortement échangeuse d'anions est une résine à anions d'ammonium quaternaire de la formule:
C₁₂H₁₈NOH.

5. Composition filtrante pour le condensat de vapeur d'une centrale thermoélectrique, conventionnelle ou nucléaire, selon la revendication 1, caractérisée en ce que le rapport des poids, basé à l'état sec, de la résine à cations faiblement acides et de la résine fortement échangeuse d'anions se situe entre 1:1 et 5:1.

6. Composition filtrante pour le condensat de vapeur d'une centrale thermoélectrique, conventionnelle ou nucléaire, selon la revendication 1, caractérisée en ce que ladite fibre inerte de polyacrylonitrile est présente dans le mélange des deux constituants restants dans une quantité en poids de moins de 50 pour cent, mesurée à l'état sec.

7. Composition filtrante pour le condensat de vapeur d'une centrale thermoélectrique, conventionnelle ou nucléaire, selon la revendication 1, caractérisée en ce que la composition présente la répartition granulométrique suivante:
| | |
|---|---|
| >190 micromètres | 2% |
| >150 micromètres | 11% |
| > 74 micromètres | 28% |
| < 74 micromètres | 59% |
